# EUROPÄISCHE PATENTSCHRIFT

(11) **EP 3 028 611 B1**
(45) Veröffentlichungstag und Bekanntmachung des Hinweises auf die Patenterteilung: **02.01.2019**
(21) Anmeldenummer: 15194416.2
(22) Anmeldetag: 13.11.2015
(51) Int. Cl.: A47J 31/52, A47J 31/60

(54) **GETRÄNKEMASCHINE MIT WASSERTANK**
BEVERAGE MACHINE WITH WATER TANK
MACHINE A BOISSON ET RESERVOIR D'EAU

(30) Priorität: 02.12.2014 DE 102014117720
(43) Veröffentlichungstag der Anmeldung: 08.06.2016
(73) Patentinhaber: Aquis Wasser-Luft-Systeme GmbH, Lindau, 9445 Rebstein (CH)
(72) Erfinder: Wallerstorfer, Kurt, 5204 Strasswalchen (AT)
(74) Vertreter: Otten, Roth, Dobler & Partner mbB Patentanwälte

(56) Entgegenhaltungen:
- WO-A1-2013/110203
- WO-A2-01/12039
- DE-A1-102006 029 105
- US-A1- 2006 060 512

## Beschreibung

Die Erfindung betrifft eine Getränkemaschine mit einem Wasservorratstank und mit einem Tankanschluss zum Anschluss des Wasservorratstanks nach dem Oberbegriff des Anspruchs 1.

In Haushaltsgeräten mit Wassertank, beispielsweise Getränkemaschinen wie Espressomaschinen oder dergleichen, werden vermehrt Wasserfilterpatronen eingesetzt, um das Wasser vor der eigentlichen Verwendung aufzubereiten. Derartige Filterpatronen sind zum Einsetzen in den Wassertank ausgebildet und zu diesem Zweck mit einem Anschlusselement zum Anschluss einer Filterablaufleitung an ein tankseitiges Anschlusselement versehen. Das Filtergehäuse wird mit permanent offenen Eintrittsöffnungen für den Eintritt von Wasser aus der Umgebung, das heißt aus dem Wassertank versehen, sodass der Wassertank über die Filterpatrone entleerbar ist. Das Wasser wird dabei über eine Saugpumpe des Haushaltsgeräts über die Filterpatrone abgesaugt.

Zur Vermeidung des Einsatzes eines ungeeigneten Filtertyps oder auch zur Erkennung einer erschöpften Filterpatrone wurde bei einer solchen Filterpatrone zusätzlich der Einsatz eines elektronischen Kommunikationselementes bekannt. Eine solche Getränkemaschine wird in der Druckschrift DE 10 2006 029 105 A1 beschrieben.

Aus dem Stand der Technik offenbart die US 2006 006 0512A1 eine an einen leitungsgebundenen Anschlusskopf anzuschließende Filterkartusche mit einem RFID-Tag, welcher vor der Montage durch Annäherung an einen RFID-Sensor ausgelesen wird. Die WO 2013/110 203 A1 offenbart eine Kaffeemaschine mit im Bereich ihrer oberen Abdeckung angeordnetem RFID-Sensor zur Erfassung von am Gehäuse von reinigungsfreien, handelsüblichen Einwegwasserbehältern angeordneten RFID-Tag abgespeicherten Daten zu Steuerung des Geräts. Die WO 01 12039A2 offenbart ein netzwerkgebundenes Getränkeaufbereitungssystem mit einem computerlesbaren Medium um kundespezifische Getränke unter Auswahl einer Vielzahl zur Verfügung stehenden Grundparametern zu steuern.

Aufgabe der Erfindung ist es demgegenüber, eine Getränkemaschine vorzuschlagen, bei der Einbau sowie der Betrieb des geräteseitigen Kommunikationselementes verbessert ist.

Diese Aufgabe wird ausgehend von einer Getränkemaschine nach dem Oberbegriff des Anspruchs 1 durch dessen kennzeichnende Merkmale gelöst.

Durch die in den Unteransprüchen genannten Maßnahmen sind vorteilhafte Ausführungen und Weiterbildungen der Erfindung möglich.

Dementsprechend zeichnet sich eine erfindungsgemäße Getränkemaschine dadurch aus, dass der Tankanschluss einen Tanksockel aufweist, in den ein Anschlussstutzen des Wasservorratstanks einsteckbar ist, wobei die Antenne eine aus Draht gewickelte Antennenspule ist, deren Innendurchmesser größer ist als der Außendurchmesser des Tanksockels und die konzentrisch zum Tanksockel angeordnet ist.

Durch die Maßnahme, einen von einer seitlichen Wand oder einem Boden der Getränkemaschine abstehenden Tanksockel vorzusehen, der mit einer äußeren Umfangsfläche versehen ist, ist es möglich, entlang dieser äußeren Umfangsfläche die erfindungsgemäße Antennenspule anzuordnen. Hierdurch kann eine geräteseitige Antennenspule mit großem Durchmesser sehr nahe an einer eingesetzten Filterpatrone angeordnet werden, die ihrerseits an eine Seitenwand am Boden des Wasservorratstanks anschließbar ist.

Bei der erfindungsgemäßen Antennenanordnung ist zudem ein Wasserabfluss bzw. -durchfluss durch die Antennenspule bzw. den Tanksockel möglich.

Vorzugsweise umgibt die Antennenspule den Tanksockel wenigstens teilweise. Diese Maßnahme bedeutet, dass die Antennenspule in axialer Richtung wenigstens teilweise auf Höhe des Tanksockels angeordnet ist. Der Tanksockel der Getränkemaschine kann auf diese Weise zur Halterung oder Fixierung der Antennenspule dienen.

In einer bevorzugten Ausführungsform der Erfindung wird die Antennenspule dabei so ausgestaltet, dass sie den Tanksockel in der Höhe wenigstens teilweise überragt.

Diese Ausführung ermöglicht es, bei entsprechender Tankausformung die Antenne in axialer Richtung noch näher an eine in dem Wasservorratstank befindliche Filterpatrone heranzusetzen, wodurch sich eine bessere drahtlose Verbindung zwischen einem entsprechenden Kommunikationselement der Filterpatrone und dem geräteseitigen Kommunikationselement bewerkstelligen lässt. Die Datenverbindung kann verbessert werden, wenn eine konstruktive Anordnung gewählt wird, in der das Kommunikationselement eines Filters näher an die Antennenspule herangebracht werden kann, was beispielsweise dann der Fall ist, wenn sich die Antennenspule entsprechend weiter in axialer Richtung in Richtung des Filters erstreckt. Die Reichweite einer erfindungsgemäßen Antennenspule wird durch die Vergrößerung des Spulendurchmessers ebenfalls vergrößert. Dies wird durch die Anordnung der Antennenspule auf der Außenseite des Tanksockels ermöglicht.

Vorteilhafterweise wird die Antennenspule auf einen ringförmigen Spulenkörper aufgebracht, der anschließend auf dem Tanksockel aufsteckbar ist. Hierdurch ist eine vom Tanksockel bzw. der Getränkemaschine unabhängige Fertigung der Antennenspule möglich, indem diese auf den Spulenkörper gewickelt wird, woraufhin anschließend die auf dem Spulenkörper sitzende Antennenspule mit dem Spulenkörper auf den Tanksockel aufgesteckt wird.

In einer besonderen Ausführungsform der Erfindung wird zudem eine ringförmige Abdeckkappe vorgesehen, die die Antennenspule und den Spulenkörper abdeckt. Eine solche Abdeckkappe ist zum einen dazu geeignet, die Antennenspule samt Spulenkörper vor schädlichen äußeren Einflüssen, beispielsweise Schmutz, mechanischer Belastungen, beispielsweise beim Einsetzen des Wassertanks oder versehentlich auf den Tanksockel fallenden Gegenständen oder auch vor Wassereintritt zu schützen. Darüber hinaus kann eine Abdeckkappe auch mit Dichtflächen versehen werden, mittels denen sie gegenüber einem Tankstutzen abdichtbar ist, sodass die Abdeckkappe letztlich auch zum Schutz vor Wasser aus dem Wasservorratstank für die Antennenspule dient.

Vorteilhafterweise wird hierzu eine Ringdichtung vorgesehen, mittels der die Abdeckkappe entlang des Innenumfangs gegenüber dem Tanksockel gedichtet wird.

In einer besonders bevorzugten Ausführungsform wird diese Ringdichtung zugleich so ausgebildet, dass sie auch zur Abdichtung des Anschlussstutzens des Wasservorratstanks gegenüber dem Tanksockel bei eingesetztem Tank dient. Eine solche Ringdichtung übt somit eine Doppelfunktion aus, indem sie Abdeckkappe und Tanksockel dicht verschließt und zugleich als Dichtung zwischen Tankstutzen und Tanksockel dient.

In einer vorteilhaften Ausführungsform der Getränkemaschine wird in dem Tankstutzen ein Ventil untergebracht, das beim Einsetzen des Wassertanks geöffnet wird, um den Durchfluss in die Getränkemaschine freizugeben. Derartige Ventile sind beim Stand der Technik in Gebrauch und werden durch getränkemaschinenseitige Betätigungselemente geöffnet, wenn der Tank aufgesetzt wird. Bei einer erfindungsgemäßen Anordnung einer Antennenspule eines maschinenseitigen Kommunikationselementes kann die Antenne wiederum dann näher an einen im Tank angeschlossenen Filter herangebracht werden, wenn das tankseitige Ventil so tief angeordnet ist, dass es im Tankstutzen und somit im eingesetzten Zustand innerhalb der Antennenspule angeordnet ist.

Alle oben beschriebenen Maßnahmen, um verschiedene Bauelemente im Inneren der Antennenspule unterzubringen, dienen dem Zweck, diese möglichst nah in Richtung des Filteranschlusses im Tank zu platzieren und zugleich einen großen Antennenquerschnitt zu ermöglichen, um somit die Zuverlässigkeit der drahtlosen Verbindung mit einem dort untergebrachten filterseitigen Kommunikationselement zu verbessern.

Ein Ausführungsbeispiel ist in den Zeichnungen dargestellt und wird anhand der Figuren nachfolgend näher erläutert.

Im Einzelnen zeigen:
- Figur 1: eine schematische Schnittdarstellung eines Ausschnitts bestehend aus maschinenseitigem Tanksockel mit eingesetztem Wassertank,
- Figur 2: eine perspektivische Darstellung eines Tanksockels gemäß Figur 1 mit erfindungsgemäßem Kommunikationselement,
- Figur 3: eine schematische Schnittdarstellung einer Filterpatrone für einen Wasservorratstank gemäß den Figuren 1 und 2,
- Figur 4: eine Ausschnittvergrößerung des unteren Teils einer Filterpatrone gemäß Figur 3,
- Figur 5: eine perspektivische Darstellung mit Blick in den unteren Bereich einer aufgeschnittenen Filterpatrone gemäß Figur 3 und
- Figur 6: eine perspektivische Darstellung der Einzelbestandteile des Kommunikationselementes einer Filterpatrone gemäß Figur 5.

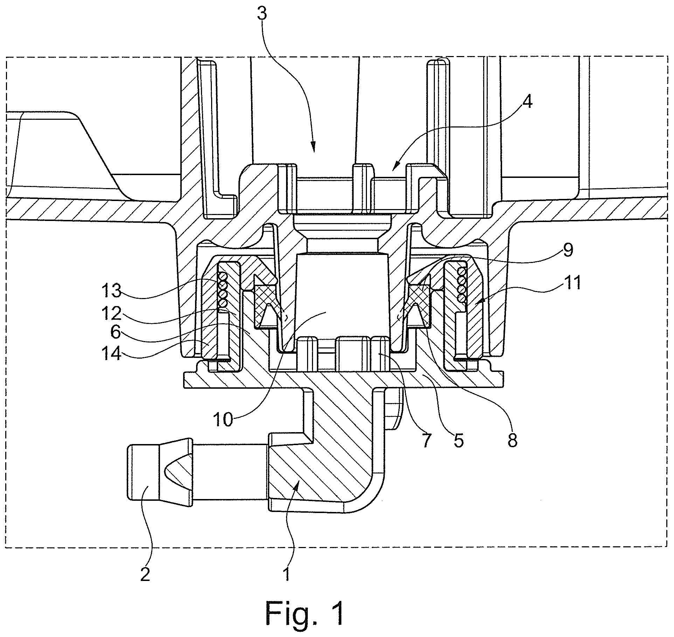

In Figur 1 ist ein Tanksockel 1 erkennbar, wie er in einer Getränkemaschine, wie einer Espressomaschine, einem Kaffeevollautomat oder dergleichen, verwendet wird. Der Tanksockel 1 kann Teil eines Gehäuses oder auf andere Art mit einer entsprechenden Getränkemaschine verbunden sein.

Eine Anschlusstülle 2 dient dem Wasserzufluss zur Getränkemaschine.

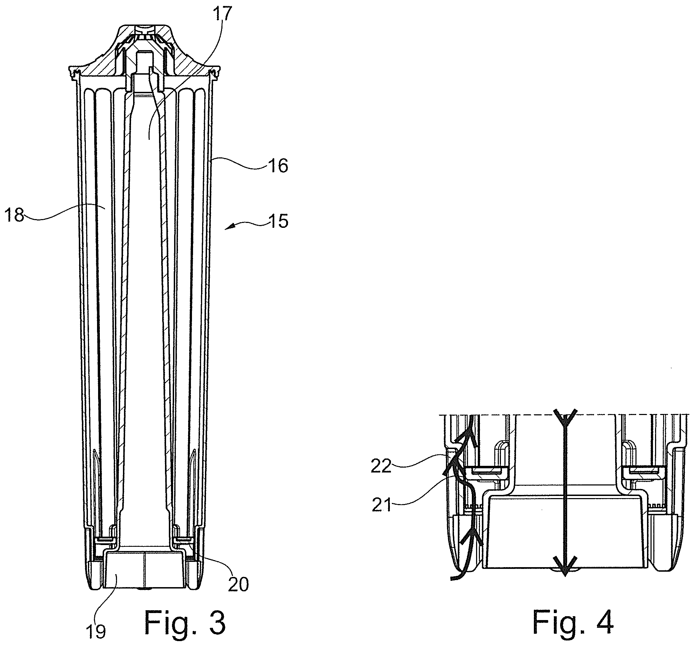

Ein Wasservorratstank 3 ist auf den Tanksockel 1 aufgesetzt. Im Inneren verfügt der Wasservorratstank 3 über eine Aufnahme 4 zur Aufnahme eines Wasserfilters, beispielsweise einer Filterpatrone gemäß Figur 3.

Der Tanksockel 1 umfasst einen Boden 5, der im Bereich der Wasserführung natürlich geschlossen ist, außerhalb der Wasserführung jedoch nicht durchgehend geschlossen sein muss.

Von dem Boden 5 erstreckt sich ein Sockelstutzen 6 mit einer Abstufung 8, in die eine Ringdichtung 9 eingesetzt ist. Die Ringdichtung 9 dichtet einen Tankstutzen 10 gegenüber dem Sockelstutzen 6 ab und stellt somit einen abgedichteten Wasserzufluss zur Getränkemaschine aus dem Wasservorratstank bei eingesetztem Wasservorratstank sicher.

Vertikalrippen 7 dienen zum Aufdrücken eines nicht näher dargestellten Ventils im Tankstutzen 10, sobald dieser auf den Tanksockel aufgesetzt wird.

Ein Kommunikationselement 11 umgibt den Sockelstutzen 6. Das Kommunikationselement 11 umfasst einen ringförmigen Spulenkörper 12, auf dem eine Antennenspule 13 aufgewickelt ist. Die Antennenspule sowie der Spulenkörper 12, 13 sind mit einer Abdeckkappe 14 abgedeckt, wobei die Abdeckkappe 14 ebenfalls über die Ringdichtung 9 gegenüber dem Sockelstutzen 6 abgedichtet ist. Die Antennenspule 13 ist somit vor äußeren Störeinflüssen wie Verschmutzung oder Wassereintritt geschützt.

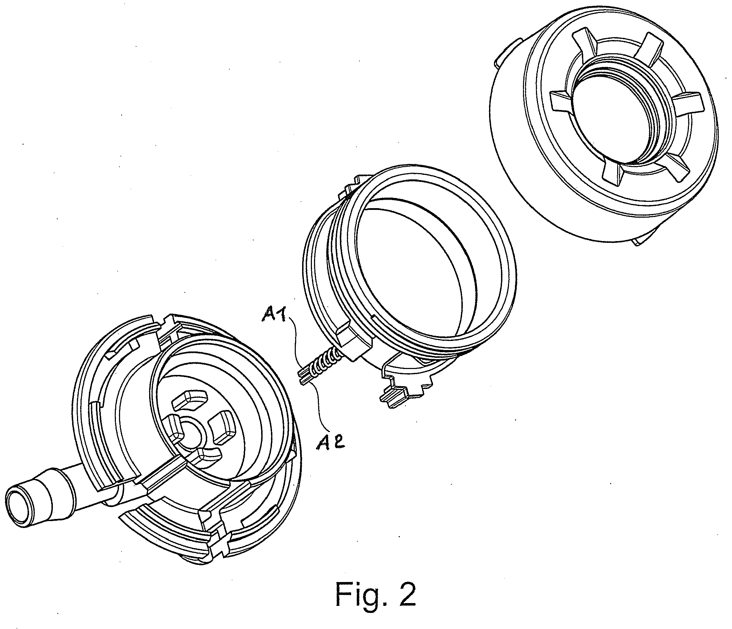

Die beschriebenen Elemente sind in der vergrößerten perspektivischen und auseinandergezogenen Darstellung gemäß Figur 2 näher erkennbar.

In Figur 2 sind zusätzlich die Anschlussleitungen A1, A2 erkennbar, die für den elektrischen Anschluss der Antennenspule 13 an die Getränkemaschine sorgen.

Über die Steuerung der Getränkemaschine kann die Antennenspule 13 sowohl zur Energieübertragung als auch zur Datenübertragung mit Strom bzw. mit Spannungsimpulsen beaufschlagt werden.

Die Energieübertragung dient hierbei zur Energieversorgung eines filterseitigen Kommunikationselementes, mittels dem auch entsprechende Informationen über die drahtlose Datenverbindung an die Getränkemaschine übermittelt und/oder von dieser empfangen werden.

Figur 3 zeigt einen Schnitt durch eine solche Filterpatrone 15 mit einem Filtergehäuse 16 sowie einer Fallleitung 17. Außerhalb der Fallleitung 17 befindet sich eine Filterkammer 18 mit nicht näher dargestelltem Filtermaterial. Die Filterpatrone 15 arbeitet hinsichtlich der Wasseraufbereitung auf bekannte Art und Weise.

Abweichend von bekannten Filterpatronen ist nunmehr im Bereich des Anschlusses 19, mit dem die Filterpatrone an den Tankboden des Wasservorratstanks 3 angeschlossen wird, ein Kommunikationselement 20 vorgesehen. Das Kommunikationselement 20 ist ringförmig aufgebaut und umschließt die Fallleitung 17 und damit den Wasserabfluss in Richtung des Tankstutzens 10 und somit in Richtung der Getränkemaschine.

In der vergrößerten Darstellung gemäß Figur 4 ist erkennbar, dass das Kommunikationselement 20 an seinem Außenumfang 21 von der Gehäusewand 22 des Filtergehäuses 16 so weit beabstandet ist, dass ein Wasserdurchfluss in Richtung Filterkammer 18 an der Außenseite des Kommunikationselementes möglich ist. Der Wasserfluss ist durch Pfeildarstellung veranschaulicht. Die Filterkammer 18 wird in dieser Ausführungsform im Aufstrom durchströmt. Das aufbereitete Wasser gelangt über die Fallleitung 17 zum Anschluss 19 in den Tankstutzen 10.

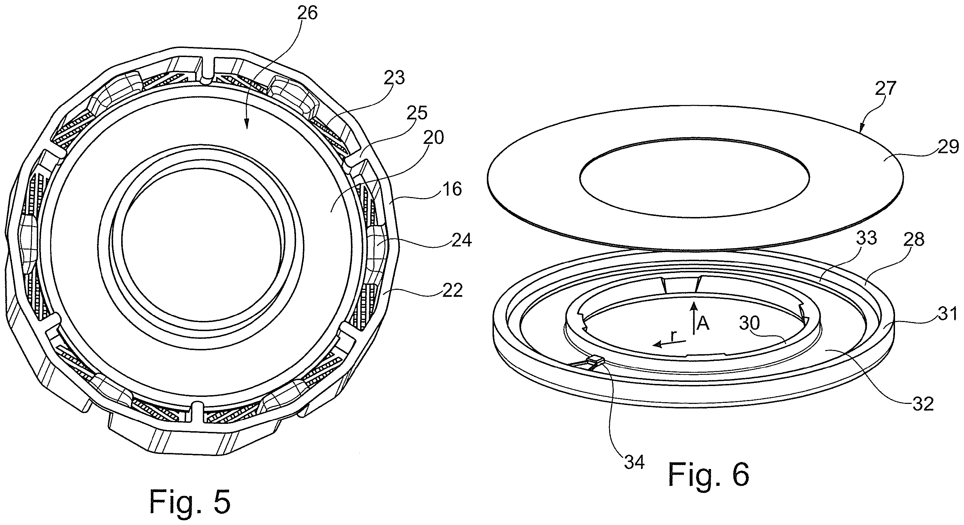

Wie in Figur 5 erkennbar, liegt das Kommunikationselement 20 in Strömungsrichtung oberhalb von Sieböffnungen 23. Es wird über Abstandshalter 24 in Position bezüglich der Gehäusewand 22 des Filtergehäuses 16 gehalten und über Rastelemente 25 auch in axialer Richtung fixiert.

Das Kommunikationselement 20 ist somit als Einlegeteil 26 ausgebildet und umfasst ein zweiteiliges Einlegegehäuse 27. Das Einlegegehäuse 27 wiederum umfasst eine ringförmige Gehäuseschale 28 sowie einen Deckel 29. Das Einlegegehäuse 27 umfasst eine innere Umfangswand 30 sowie eine äußere Umfangswand 31, die sich beide von einem Gehäuseboden 31 aus in axialer Richtung erstrecken.

In die Gehäuseschale 28 ist eine aus einem Draht gewickelte Antennenspule 33 eingelegt. An die Antennenspule 33 ist ein Mikrochip 34 angeschlossen. Die Antennenspule 33 ist aus einem einzigen Draht gewickelt, wobei der Mikrochip 34 mit den Drahtenden verbunden, z.B. auf die beiden Drahtenden aufgesteckt und fest und dauerhaft mit diesen verbunden, beispielsweise verklebt, verschweißt oder vergossen ist.

Wie in der Darstellung gemäß Figur 6 erkennbar, befindet sich in axialer Richtung A oberhalb sowie in radialer Richtung r innerhalb der Antennenspule 33 ein Luftraum, in dem die Antennenspule 33 in direktem Luftkontakt steht. Außen fixiert die äußere Umfangswand 31 die Antennenspule 33. Stirnseitig wird die Antennenspule 33 am Gehäuseboden 32 aufgesetzt und kann dort mit diesem verbunden werden, beispielsweise verrastet, verklebt oder auch nur verklemmt werden.

Der Mikrochip 34 stützt sich an der inneren Umfangswand 30 ab, wodurch seine Position und damit auch die zuverlässige

Kontaktierung zusätzlich gesichert ist.

Der Deckel 29, der bei entsprechend geringer Materialstärke auch als Deckelfolie ausgestaltet sein kann, wird auf die Gehäuseschale 28 aufgelegt und wasserdicht mit dieser verbunden, beispielsweise verschweißt oder verklebt.

Die Antennenspule 33 bildet zusammen mit dem Mikrochip 34 ein so genanntes RFID-Element, in dem Informationen abspeicherbar und abrufbar sind. Ein solches Element benötigt keine eigene Energieversorgung, da elektromagnetisch eingestrahlte Energie über die Antennenspule 33 nutzbar ist, um den Mikrochip 34 zu betreiben.

Diese Energie wird beispielsweise über die Antennenspule 13 der Getränkemaschine eingestrahlt. Auch der Datenfluss wird vorzugsweise über die gleichen Antennenspulen 13 und 33 bewerkstelligt.

Durch die dargestellte Bauform und Anordnung der Antennenspulen 13 und 33 ist für beide Antennen ein vergleichsweise großer Querschnitt möglich. Zugleich ist eine in axialer Richtung sehr nah beieinander liegende Einbaulage realisierbar, wodurch eine sichere Datenübertragung bei vertretbarer Energiestrahlung ermöglicht wird.

Gemäß der Erfindung ist es möglich, Filterdaten abrufbar in dem entsprechenden Filter vorzusehen, und gegebenenfalls die Getränkemaschine entsprechend zu steuern. Bei entsprechender Ausgestaltung ist es jedoch auch möglich, zusätzliche Daten von der Getränkemaschine in den Datenspeicher des Mikrochips 34 zu schreiben, beispielsweise die Betriebsdauer des Filters, sodass dieser selbst bei Entnahme und erneuter Verwendung die Daten über seinen Zustand, beispielsweise hinsichtlich seiner Erschöpfung, einer Getränkemaschine zur Verfügung stellen kann.

### Bezugszeichenliste:

- 1: Tanksockel
- 2: Anschlusshülle
- 3: Wassertank
- 4: Aufnahme
- 5: Boden
- 6: Sockelstutzen
- 7: Vertikalrippen
- 8: Abstufung
- 9: Ringdichtung
- 10: Tankstutzen
- 11: Kommunikationselement
- 12: Spulenkörper
- 13: Antennenspule
- 14: Abdeckkappe
- 15: Filterpatrone
- 16: Filtergehäuse
- 17: Fallleitung
- 18: Filterkammer
- 19: Anschluss
- 20: Kommunikationselement
- 21: Außenumfang
- 22: Gehäusewand
- 23: Sieböffnungen
- 24: Abstandshalter
- 25: Rastelemente
- 26: Einlegeteil
- 27: Einlegegehäuse
- 28: Gehäuseschale
- 29: Deckel
- 30: innere Umfangswand
- 31: äußere Umfangswand
- 32: Gehäuseboden
- 33: Antennenspule
- 34: Mikrochip

## Patentansprüche

1. Getränkemaschine mit einem Wasservorratstank (3) und mit einem Tankanschluss zum Anschluss des Wasservorratstanks, in den ein Anschlussstutzen (10) des Wasservorratstanks einsteckbar ist, und mit einem elektronischen Kommunikationselement (11) zur drahtlosen Verbindung zwischen einem entsprechenden Kommunikationselement (20) einer in dem Wasservorratstank befindlichen Filterpatrone (15) und dem geräteseitigen Kommunikationselement (11), das eine Antenne umfasst, **dadurch gekennzeichnet, dass** der Tankanschluss einen von einer seitlichen Wand oder einem Boden der Getränkemaschine abstehenden Tanksockel (1) mit einer äußeren Umfangsfläche aufweist, in den der Anschlussstutzen (10) des Wasservorratstanks einsteckbar ist, die Antenne eine aus Draht gewickelte Antennenspule (13) ist, deren Innendurchmesser größer ist als der Außendurchmesser des Tanksockels (1) und die konzentrisch zum Tanksockel angeordnet ist.

2. Getränkemaschine nach Anspruch 1, **dadurch gekennzeichnet, dass** die Antennenspule (13) den Tanksockel (1) wenigstens teilweise umgibt.

3. Getränkemaschine nach einem der vorgenannten Ansprüche, **dadurch gekennzeichnet, dass** die Antennenspule (13) den Tanksockel (1) in der Höhe wenigstens teilweise überragt.

4. Getränkemaschine nach einem der vorgenannten Ansprüche, **dadurch gekennzeichnet, dass** die Antennenspule (13) auf einem ringförmigen Spulenkörper (12) sitzt, der auf den Tanksockel (1) aufgesteckt ist.

5. Getränkemaschine nach einem der vorgenannten Ansprüche, **dadurch gekennzeichnet, dass** eine ringförmige Abdeckkappe (14) vorgesehen ist, die die Antennenspule (13) und den Spulenkörper (12) abdeckt.

6. Getränkemaschine nach einem der vorgenannten Ansprüche, **dadurch gekennzeichnet, dass** eine Ringdichtung (9) vorgesehen ist, die die Abdeckkappe (14) entlang des Innenumfangs gegenüber dem Tanksockel(1) dichtet.

7. Getränkemaschine nach einem der vorgenannten Ansprüche, **dadurch gekennzeichnet, dass** die Ringdichtung (9) zugleich zur Abdichtung des Anschlussstutzens (10) des Wasservorratstanks gegenüber dem Tanksockel bei eingesetztem Tank ausgebildet ist.

8. Getränkemaschine nach einem der vorgenannten Ansprüche, **dadurch gekennzeichnet, dass** ein Ventil im Tankanschlussstutzen (10) vorgesehen ist, das in eingesetztem Zustand des Tanks wenigstens teilweise in das Innere der Antennenspule (13) eintaucht.

## Claims

1. A beverage machine comprising a water storage tank (3) and a tank port for connection of the water storage tank, into which port a connection piece (10) of the water storage tank can be inserted, and comprising an electronic communication element (11) for wireless connection between a corresponding communication element (20) of a filter cartridge (15) located in the water storage tank and the device-side communication element (11), which comprises an antenna, **characterised in that** the tank port comprises a tank base (1) protruding from a side wall or a floor of the beverage machine and having an outer peripheral surface, into which base the connection piece (10) of the water storage tank can be inserted, the antenna is an antenna coil (13) wound from wire, the inner diameter of which coil is greater than the outer diameter of the tank base (1) and the coil is arranged concentrically with the tank base.

2. The beverage machine according to claim 1, **characterised in that** the antenna coil (13) at least partially surrounds the tank base (1).

3. The beverage machine according to one of the preceding claims, **characterised in that** the antenna coil (13) projects at least partially above the height of the tank base (1).

4. The beverage machine according to one of the preceding claims, **characterised in that** the antenna coil (13) sits on a ring-shaped coil former (12) which is attached to the tank base (1).

5. The beverage machine according to one of the preceding claims, **characterised in that** a ring-shaped covering cap (14) is provided, which covers the antenna coil (13) and the coil former (12).

6. The beverage machine according to one of the preceding claims, **characterised in that** a ring seal (9) is provided, which seals the covering cap (14) with respect to the tank base (1) along the inner circumference.

7. The beverage machine according to one of the preceding claims, **characterised in that** the ring seal (9) is formed to simultaneously seal the connection piece (10) of the water tank with respect to the tank base when the tank is inserted.

8. The beverage machine according to one of the preceding claims, **characterised in that** a valve is provided in the tank connection piece (10), which valve, when the tank is inserted, is at least partially inside the antenna coil (13).

## Revendications

1. Machine à boissons comprenant un réservoir d'eau (3) et un raccord de réservoir destiné à raccorder le réservoir d'eau, dans lequel un élément de raccord (10) du réservoir d'eau peut être inséré et comprenant un élément de communication électronique (11) pour la liaison sans fil entre un élément de communication (20) correspondant d'une cartouche filtrante (15) se trouvant dans le réservoir d'eau et l'élément de communication (11) côté appareil, qui comprend une antenne, **caractérisée en ce que** le raccord de réservoir présente un socle de réservoir (1) éloigné d'une paroi latérale ou d'un fond de la machine à boissons, ayant une surface circonférentielle extérieure, dans lequel peut s'insérer l'élément de raccord (10) du réservoir d'eau, **en ce que** l'antenne est une bobine d'antenne (13) en fil enroulé, dont le diamètre intérieur est supérieur au diamètre extérieur du socle de réservoir (1) et qui est disposée concentriquement par rapport au socle de réservoir.

2. Machine à boissons selon la revendication 1, **caractérisée en ce que** la bobine d'antenne (13) entoure le socle de réservoir (1) au moins partiellement.

3. Machine à boissons selon l'une des revendications précédentes, **caractérisée en ce que** la bobine d'antenne (13) dépasse du socle de réservoir (1) en hauteur, au moins partiellement.

4. Machine à boissons selon l'une des revendications précédentes, **caractérisée en ce que** la bobine d'antenne (13) est placée sur un corps (12) de bobine annulaire qui est introduit dans le socle de réservoir (1).

5. Machine à boissons selon l'une des revendications précédentes, **caractérisée en ce qu'**un couvercle annulaire (14) est prévu, qui recouvre la bobine d'antenne (13) et le corps (12) de bobine.

6. Machine à boissons selon l'une des revendications précédentes, **caractérisée en ce qu'**un joint d'étanchéité annulaire (9) est prévu, qui rend étanche le couvercle (14) le long de la circonférence intérieure par rapport au socle (1) de réservoir.

7. Machine à boissons selon l'une des revendications précédentes, **caractérisée en ce que** le joint d'étanchéité annulaire (9) est conçu simultanément pour rendre étanche l'élément de raccord (10) du réservoir d'eau par rapport au socle de réservoir lorsque le réservoir est inséré.

8. Machine à boissons selon l'une des revendications précédentes, **caractérisée en ce qu'**une soupape dans l'élément de raccord (10) de réservoir est prévue, qui rentre, lors de l'utilisation du réservoir, au moins en partie à l'intérieur de la bobine d'antenne (13).
